# EUROPÄISCHE PATENTSCHRIFT

(11) **EP 2 978 346 B1**
(45) Veröffentlichungstag und Bekanntmachung des Hinweises auf die Patenterteilung: **16.08.2017**
(21) Anmeldenummer: 14701090.4
(22) Anmeldetag: 22.01.2014
(51) Int. Cl.: A47J 31/60

(54) **GETRÄNKEAUTOMAT SOWIE VERFAHREN ZUM BETRIEB EINES SOLCHEN GETRÄNKEAUTOMATEN**
AUTOMATIC BEVERAGE MACHINE AND METHOD FOR OPERATING AN AUTOMATIC BEVERAGE MACHINE OF THIS KIND
DISTRIBUTEUR AUTOMATIQUE DE BOISSONS, ET PROCÉDÉ POUR FAIRE FONCTIONNER UN TEL DISTRIBUTEUR AUTOMATIQUE DE BOISSONS

(30) Priorität: 26.03.2013 CH 671132013
(43) Veröffentlichungstag der Anmeldung: 03.02.2016
(73) Patentinhaber: Schaerer AG, 4528 Zuchwil (CH)
(72) Erfinder: SALZMANN, Fabian, 3098 Köniz (CH); EGLI, Peter, 3053 Münchenbuchsee (CH); SINZIG, Peter, 3302 Moosseedorf (CH)
(74) Vertreter: IPrime Rentsch Kaelin AG
(86) Internationale Anmeldenummer: PCT/EP2014/051205
(87) Internationale Veröffentlichungsnummer: WO 2014/154376

(56) Entgegenhaltungen:
- WO-A1-2012/029047
- WO-A1-2012/072758
- WO-A2-2009/138863
- FR-A1- 2 929 090
- US-A1- 2003 201 337

## Beschreibung

### TECHNISCHES GEBIET

Die vorliegende Erfindung bezieht sich auf das Gebiet Getränkeautomaten. Sie betrifft einen Getränkeautomaten gemäss dem Oberbegriff des Anspruchs 1.

Sie betrifft weiterhin ein Verfahren zum Betrieb eines solchen Getränkeautomaten.

### STAND DER TECHNIK

Getränkeautomaten, die ein Mischgetränk erst zubereiten und dann in einen unter einen Auslauf gestellten Behälter, meist einen Pappbecher, ausgeben, haben im Auslauf häufig auch Ausgänge, durch die sirupartige, konzentrierte Getränkekomponenten ausgeben werden. Derartige Komponenten haften aufgrund ihrer Konsistenz häufig an den Rändern und randnahen Aussenbereichen der Ausgänge, trockenen an, oder bilden zähe Rückstände, die bei einem Getränkewechsel den Geschmack negativ beeinflussen können oder bei fehlender Reinigung den Auslauf behindern können.

Aus diesen und anderen Gründen muss bei Getränkeautomaten dem Auslauf hinsichtlich der Konfiguration und Auslegung sowie einer möglichen Reinigung besondere Aufmerksamkeit gewidmet werden.

Druckschrift EP 1 656 863 B1 offenbart eine Vorrichtung zum Erzeugen einer Mischung aus Milch und Wasserdampf, die einen Mischkopf umfasst, der einen Wassereinlass und einen Milcheinlass aufweist, die zur Zufuhr von Wasserdampf und Milch zu einem Mischbereich ausgebildet sind, welcher Mischbereich zum Mischen und Emulgieren der zugeführten Fluide ausgebildet ist. Weiterhin ist eine Auslassdüse zur Abgabe der emulgierten Mischung vorhanden, sowie ein Zuführeinrichtung für ein Spülmittel und eine Zuführeinrichtung für Milch. Eine Vorrichtung zum Spülen des Mischkopfes ist vorgesehen, die wahlweise den Milcheinlass und die Zuführeinrichtung für Milch in hydraulische Verbindung mit der Zuführeinrichtung für das Spülmittel bringt, so dass wahlweise Milch oder Wasser in den Milcheinlass und damit in den Mischkopf einströmen kann. Im Spülmodus der Vorrichtung werden die folgenden Schritte ausgeführt: Der Milcheinlass wird mit der Zuführeinrichtung für Spülmittel in hydraulischen Kontakt gebracht; und Wasser wird in den Mischkopf am Milcheinlass eingelassen und strömt durch den Mischkopf, um den Mischkopf über die Auslassdüse zu verlassen und in den Milchzufuhrbehälter zu gelangen. Der Reinigungsmechanismus ist allerdings mechanisch sehr aufwändig und benötigt einen Milchzufuhrbehälter. Eine spezielle Tropfenauffangeinrichtung unter dem Auslass ist nicht vorgesehen.

Die Druckschrift EP 2 218 378 A2 (WO 2006050769 A) beschreibt einen Getränkeautomaten zur Herstellung von Getränken, der einen Rahmen umfasst, und einen Getränkeauslass, der zur Abgabe eines Getränkes in ein darunter gestelltes Gefäss ausgebildet ist. Der Automat umfasst auch eine Tropfenauffangeinrichtung, die so beschaffen ist, dass sie wahlweise unter dem Getränkeauslass oder um den Getränkeauslass herum angeordnet ist, um Flüssigkeit oder Schaum aufzufangen, wenn der Automat kein Getränk abgibt und/oder wenn das Gefäss aus dem Bereich unter dem Auslass entfernt worden ist. Eine zustellbare Reinigungsvorrichtung für den Auslass ist nicht vorgesehen. Die Tropfenauffangeinrichtung ist allerdings nach Art einer Ablaufrinne ausgebildet, die aufgefangene Flüssigkeit unmittelbar in einen in der Maschine angeordneten Behälter ableitet.

Die Druckschrift US 2011017073 A1 offenbart einen Getränkezubereiter, der einen Körper mit einer Fassade umfasst, und einen Getränkezubereitungsbereich, der an der einen Seite durch die Fassade begrenzt ist, im oberen Teil durch Getränkeauslässe, und im unteren Teil durch eine Becher-Abstellfläche und eine bewegliche Dampfdüse, die durch einen Bewegungsmechanismus mit dem Körper verbunden ist. Der Körper umfasst ein Gehäuse, dass einen Reinigungsbereich festlegt, und in dem ein Spülbehälter untergebracht ist, der eine obere Öffnung aufweist sowie eine Abflussvorrichtung, und in welchem die bewegliche Düse durch den Bewegungsmechanismus in einer Vertikalbewegung angetrieben ist, so dass ihr freies Ende in den Behälter durch die obere Öffnung eintritt. Der Reinigungsmechanismus ist ebenfalls mechanisch sehr aufwändig. Eine spezielle Tropfenauffangeinrichtung unter dem Auslass ist nicht vorgesehen.

Die Druckchrift WO 2012/029047 A1 beschreibt eine Vorrichtung zur Zubereitung eines Heissgetränks, insbesondere ein milchbasiertes Getränk, umfassend eine Struktur, in welche ein Gefäss für die Zubereitung des Getränks positioniert werden kann; eine Heissdampfquelle, welche geeignet ist, einen Dampfstrom in ein Gefäss oder einen Behälter bereitzustellen; ein Rührgerät umfassend einen drehbaren Kolben, welcher einen Rührrotor trägt; und eine Steuereinheit. Die Steuereinheit ist ausgebildet, Folgendes zu erwirken: die Bewegung des Rührgeräts zwischen seiner Ruheposition und seiner Arbeitsposition; die Aktivierung der Dampfquelle und des Rührgeräts während dem sich der Kolben und der Rotor innerhalb eines Gefässes für die Zubereitung eines Getränks erstrecken; und die Aktivierung der Dampfquelle und des Rührgeräts während dem der Kolben und der Rotor sich in den Reinigungsbehälter erstrecken.

Die Druckschrift WO 2009/138863 A2 beschreibt ein Getränkeverkaufsautomat, umfassend ein von aussen zugängliches Aufnahmefach, das eine Getränkemischstation aufweist; eine Getränkeausgabevorrichtung mit mindestens einem Auslass, welche an der Mischstation in einer festen, dem Aufnahmefach zugewandten Position angeordnet ist; ein erstes Element zum Einspeisen eines Bechers in die Position unterhalb des Auslasses; und ein zweites Element, welches nach dem Auslass und in Bezug zum ersten Element zu und von einer Stellung, welche den Auslass vom Aufnahmefach trennt, bewegbar ist.

### DARSTELLUNG DER ERFINDUNG

Es ist daher eine Aufgabe der Erfindung, einen Getränkeautomaten anzugeben, der die Nachteile bekannter Geräte vermeidet und sich einerseits durch eine vergleichsweise einfache Mechanik auszeichnet und andererseits das Auffangen von Tropfen direkt unterhalb des Auslasses sowie eine Reinigung des Auslasses von aussen ermöglicht.

Es ist weiterhin eine Aufgabe der Erfindung, ein Verfahren zum Betrieb eines solchen Getränkeautomaten anzugeben.

Diese und andere Aufgaben werden durch die Merkmale der Ansprüche 1 und 12 gelöst.

Der erfindungsgemässe Getränkeautomat umfasst einen nach unten gerichteten Auslauf zur Ausgabe eines im Getränkeautomaten zubereiteten Getränks und/oder einer im oder am Getränkeautomaten vorgehaltenen Komponente eines Getränks in ein darunter stehendes Gefäss, wobei im Bereich des Auslaufs eine Wanne angeordnet ist, welche zwischen einer ersten Position, in der das zubereitete Getränk bzw. die vorgehaltene Komponente ungehindert aus dem Auslauf in ein darunter stehendes Gefäss gelangen kann, und einer zweiten Position, in der die Wanne zumindest einen unteren Teil des Auslaufs in sich aufnimmt, hin und her bewegbar ist. Der Getränkeautomat ist dadurch gekennzeichnet, dass die Wanne um eine horizontale Schwenkachse verschwenkbar angeordnet ist, derart, dass die Bewegung der Wanne zwischen der ersten und zweiten Position als Schwenkbewegung um die Schwenkachse ausführbar ist Hierdurch lässt sich die Mechanik für die Bewegung der Wanne besonders stark vereinfachen.

Die Wanne, in die der Auslass mit einem unteren Teil eintaucht, kann in der zweiten Position auf einfache Art und Weise zur Reinigung der von Anhaftungen und Flüssigkeitsresten betroffenen Partien des Auslasses eingesetzt werden, indem die Wanne mit einer Spül- bzw. Reinigungsflüssigkeit gefüllt wird, die durch das Einfüllen oder durch zusätzliches Einblasen von Dampf oder Luft in Bewegung gehalten wird und so die Verunreinigungen vom Auslass entfernt. Nach Beendigung des Reinigungsvorgangs kann die Wanne durch Absaugen, Ablassen oder Auskippen entleert werden.

Zum Einfüllen und Absaugen können grundsätzlich an der Wanne selbst angeordnete Zuläufe und Abläufe eingesetzt werden. Besonders einfach ist es jedoch, den Auslass selbst bzw. im Auslass vorgesehene Ausgabeöffnungen, -rohre oder -schläuche zum Einfüllen und/oder Absaugen der Spülflüssigkeit einzusetzen, zumal die zugehörigen Leitungen ohnehin auch innen von Zeit zu Zeit gespült werden sollten.

Eine Ausgestaltung der Erfindung ist dadurch gekennzeichnet, dass sich die Wanne in der zweiten Position in horizontaler Lage befindet.

Eine weitere Ausgestaltung der Erfindung ist dadurch gekennzeichnet, dass sich die Wanne in der ersten Position in einer gekippten Lage befindet, derart, dass eine in der Wanne befindliche Flüssigkeit vollständig nach unten auslaufen kann. Hierdurch wird ein besonders einfaches Ausleeren der Wanne ermöglicht.

Eine wieder andere Ausgestaltung der Erfindung ist dadurch gekennzeichnet, dass der Auslauf an der Vorderseite des Getränkeautomaten angeordnet ist. und dass die Schwenkachse parallel zur Vorderseite des Getränkeautomaten orientiert ist. Dadurch ist ein besonders platzsparender Aufbau der Mechanik erreichbar.

Eine weitere Ausgestaltung der Erfindung ist dadurch gekennzeichnet, dass die Wanne bei der Bewegung von der zweiten in die erste Position nach aussen herausgeschwenkt wird. Hierdurch können notwendige Änderungen im Getränkeautomaten selbst minimiert werden.

Eine weitere Ausgestaltung der Erfindung ist dadurch gekennzeichnet, dass der Auslauf und die darunter befindliche Wanne in vertikaler Richtung, insbesondere mittels eines steuerbaren motorischen Antriebs, relativ zueinander beweglich sind.

Eine andere Ausgestaltung der Erfindung ist dadurch gekennzeichnet, dass zum Reinigen des unteren Teils des Auslaufs, der sich in der Wanne befindet, wenn die Wanne die zweite Position einnimmt, erste Mittel vorgesehen sind, mittels derer eine Spülflüssigkeit in die Wanne eingefüllt werden kann. Das Einfüllen von Spül- bzw. Reinigungsflüssigkeit in die Wanne ermöglicht ein einfaches und wirkungsvolles "Baden" verschmutzter äusserer Teile des Auslasses, bei dem auch hartnäckige Verschmutzung eingeweicht und mit der Flüssigkeit entfernt werden kann.

Eine weitere Ausgestaltung der Erfindung ist dadurch gekennzeichnet, dass zweite Mittel vorgesehen sind, mittels derer eine in der Wanne befindliche Flüssigkeit aus der Wanne entfernt werden kann. Wenn die mit der Spülflüssigkeit gefüllte Wanne nicht durch Auskippen geleert werden soll, besteht so die Möglichkeit, den Inhalt der Wanne entweder durch einen speziellen Auslass abzulassen oder durch eine Absaugvorrichtung abzusaugen. Die Absaugvorrichtung kann - ebenso wie die Einfüllvorrichtung bzw. die Einfüllmittel Teil des Auslasses sein. So kann das Reinigungsmittel bzw. die Spülflüssigkeit beispielsweise durch die Ausläufe für Sirup oder dgl. in den Getränkeautomaten zurück gesaugt werden, in dem die zugehörigen Siruppumpen rückwärts laufend betrieben werden.Eine noch andere Ausgestaltung der Erfindung ist dadurch gekennzeichnet, dass für die Bewegung der Wanne zwischen der ersten und zweiten Position ein motorischer Antrieb am Getränkeautomaten vorgesehen ist. Ein solcher, insbesondere von einer zentralen Steuereinheit gesteuerter, motorischer Antrieb ermöglicht einen automatisierten Reinigungsvorgang, der beispielsweise nach der Ausgabe spezieller Getränke (mit Sirup oder dgl.) oder nach einer vorbestimmten Anzahl von Getränkeausgaben automatisch eingeleitet und durchgeführt wird.

Eine weitere Ausgestaltung der Erfindung ist dadurch gekennzeichnet, dass die Wanne zwischen der ersten und zweiten Position eine Zwischenposition einnehmen kann, in welcher sie aus dem Auslauf austretende Restflüssigkeit auffängt. Hierdurch kann auf einfache Weise zusätzlich ein unerwünschtes Nachtropfen des Auslasses bei der Ausgabe eines Getränks vermieden werden. Die dabei aufgefangene Flüssigkeit kann ebenfalls durch "Auskippen" der Wanne entfernt werden.

Eine andere Ausgestaltung der Erfindung ist dadurch gekennzeichnet, dass unterhalb des Gefässes ein Ausguss angeordnet ist, und das unmittelbar unter der Wanne eine Auffangwanne ortsfest angeordnet ist, die eine Öffnung im Boden zum Durchlassen von durch den Auslauf abgegebenen Flüssigkeiten aufweist.

Die Auffangwanne fängt aus der Wanne überschwappende Flüssigkeit auf und leitet sie sicher ab. Die Wanne kann gleichzeitig aber auch durch Kippen in die darunter befindliche Auffangwanne normal entleert werden.

Eine weitere Ausgestaltung der Erfindung ist dadurch gekennzeichnet, dass der Getränkeautomat ein Getränkeverkaufsautomat ist, und dass der Auslauf für die Ausgabe einer Vielzahl unterschiedlicher Getränke ausgelegt ist. Da bei derartigen Automaten vermehrt auch Sirup oder Milch oder kakaohaltige Getränke zum Einsatz kommen, ist eine regelmässige Reinigung des Auslasses von aussen besonderes wichtig, zumal der Normalbetrieb nicht von speziellem Personal überwacht wird.

Eine andere Ausgestaltung der Erfindung ist dadurch gekennzeichnet, dass der Getränkeautomat ein Kaffeeautomat ist.

Beim erfindungsgemässen Verfahren zum Betrieb des Getränkeautomaten nach der Erfindung wird die Wanne in der ersten Position gehalten, wenn der Getränkeautomat am Auslauf ein Getränk in ein unter dem Auslauf stehendes Gefäss ausgibt, und nach Beendigung einer Getränkeausgabe zum Reinigen des Auslaufs in die zweite Position bewegt und mit einer Spülflüssigkeit gefüllt. Die Reinigung kann dabei nach jeder Getränkeausgabe, nach bestimmten Getränkeausgaben, nach Ablauf einer vorgegebenen Zeit oder nach Erreichen einer vorgegebenen Anzahl von Getränkeausgaben erfolgen.

Eine Ausgestaltung des erfindungsgemässen Verfahrens ist dadurch gekennzeichnet, dass nach Beendigung der Reinigung des Auslaufs die Wanne zum Ausleeren der Spülflüssigkeit in die erste Position bewegt wird.

Es ist aber auch denkbar, dass nach Beendigung der Reinigung des Auslaufs die Spülflüssigkeit aus der Wanne abgelassen oder abgesaugt wird.

Eine andere Ausgestaltung des erfindungsgemässen Verfahrens ist dadurch gekennzeichnet, dass die Wanne nach Beendigung der Ausgabe eines Getränks zum Auffangen von aus dem Auslauf austretender Restflüssigkeit in eine zwischen der ersten und zweiten Position liegende Zwischenposition bewegt wird. Hierdurch kann vermieden werden, dass nachtropfende Getränkebestandteile unkontrolliert in den Bereich unterhalb des Auslasses gelangen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer vereinfachten Frontalansicht einen Getränkeverkaufsautomaten, wie er bei sogenannten "Kiosk"-Lösungen eingesetzt wird;
- Fig. 2: in einer perspektivischen Explosionsdarstellung den Aufbau einer Auslassanordnung eines Getränkeautomaten mit verschwenkbarer Wanne gemäss einem Ausführungsbeispiel der Erfindung;
- Fig. 3: die Auslassanordnung aus Fig. 2 im montierten Zustand in einer Strichdarstellung;
- Fig. 4: in einer vergrösserten perspektivischen Ansicht die Anordnung aus Reinigungswanne und Auffangwanne des Ausführungsbeispiels aus Fig. 2 und 3; und
- Fig. 5-7: die verschiedenen Positionen, die eine erfindungsgemässe Wanne gemäss einem anderen Ausführungsbeispiel der Erfindung einnehmen kann.

### WEGE ZUR AUSFÜHRUNG DER ERFINDUNG

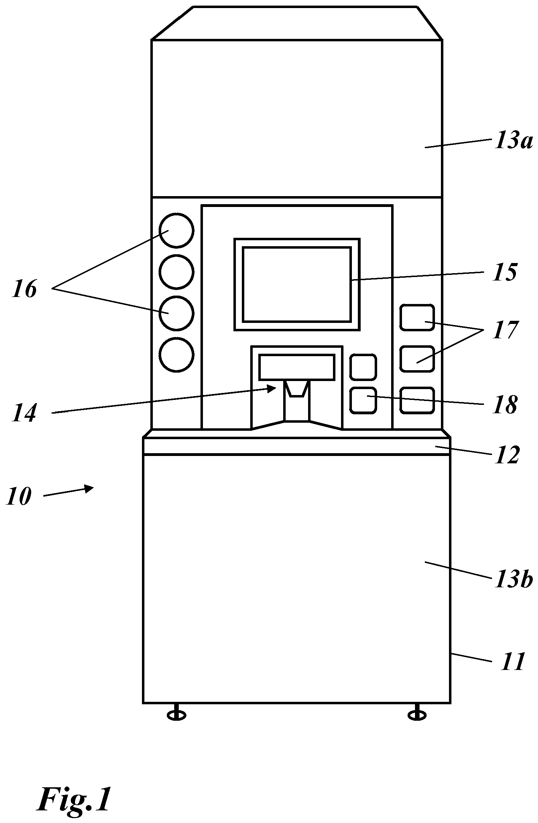

In Fig. 1 ist in einer vereinfachten Darstellung in der Ansicht von vorne ein beispielhafter Getränkeverkaufsautomat 10 wiedergegeben, der nach Art einer Kiosklösung für die Abgabe und Bezahlung von Kaffee-basierten Getränken ausgebildet ist.

Der Getränkeverkaufsautomat 10 ist in einem Gehäuse 11 untergebracht, welches einen Oberteil 1 3a und einen Unterteil 1 3b aufweist, die durch eine Konsole 12 getrennt sind, welche eine Ebene für die Ausgabe der Getränk gebildet. Die eigentliche Getränkeausgabe 14 ist in einem zurückspringenden Raum oberhalb der Konsole 12 angeordnet. Oberhalb der Getränkeausgabe ist eine Bedien/Anzeigeeinheit 15 angeordnet, die beispielsweise mit einer Touchscreen ausgestattet ist und zur Wahl und Anzeige des zuzubereitenden Getränks dient. Auf der linken Seite sind seitlich Becherschächte 16 angeordnet, aus denen Becher zur Aufnahme des Getränks entnommen werden können. Auf der rechten Seite sind seitlich Fächer 17 angeordnet, in denen Zucker, Löffel oder dergleichen bereitgehalten werden. Des Weiteren ist eine Bezahleinheit 18 vorgesehen, die zur Bezahlung des gewählten Getränks mittels Münzen oder Chipkarte dient. Selbstverständlich können die einzelnen Elemente 14-18 auch anders angeordnet sein, oder andere Elemente zusätzlich oder ersatzweise vorgesehen werden.

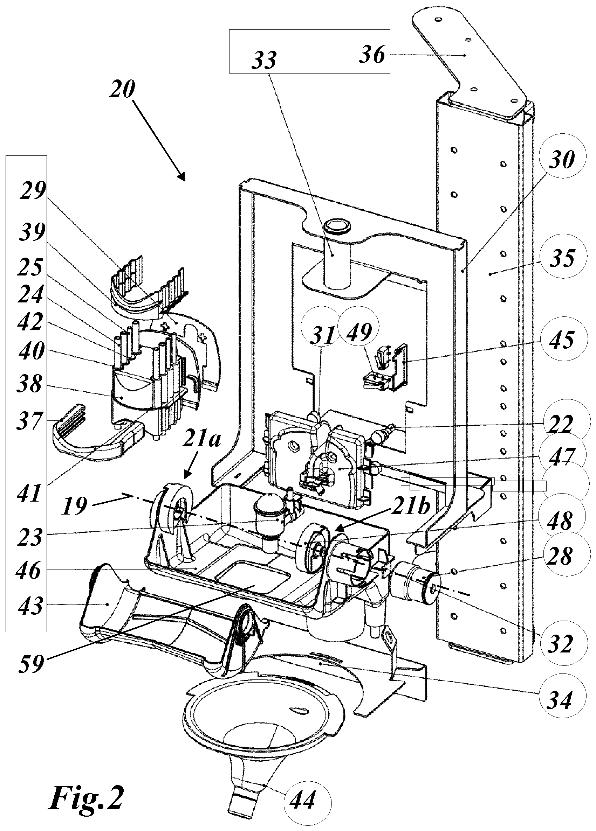

Innerhalb der Getränkeausgabe 14 ist ein Auslaufmodul vorgesehen, das gemäss einem Ausführungsbeispiel der Erfindung den in Fig. 2-4 dargestellten Aufbau hat. Das Auslaufmodul 20 der Fig. 2-4 ist in der Maschine an einem sich vertikal erstreckenden Modulsträger 35 montiert, der seinerseits über am oberen und unteren Ende des Modulträgers angebrachte, horizontale Scharnierplatten 36 herausschwenkbar an der Maschine befestigt ist.

Das Auslaufmodul 20 umfasst zuunterst einen trichterförmigen Ausguss 44, der über einen abgewinkelten Ausgusshalter 34 separat an dem Modulträger 35 montiert ist und mit einer nicht dargestellten, durchbrochenen Tragplatte abgedeckt ist, auf die ein Becher 26 zur Aufnahme des Getränks gestellt werden kann. Die übrigen Teile des Auslaufmoduls 20 werden von einem Halteblech 30 getragen, das ebenfalls am Modulträger 35 montiert ist. Das Halteblech 30 kann dabei entweder ortsfest am Modulträger 35 befestigt sein, oder aber in vertikaler Richtung verfahrbar. Im oberen Bereich des Halteblechs 30 ist ein Führungsrohr 33 vorgesehen durch welches die verschiedenen Schläuche für die auszugebenden Flüssigkeiten (Getränke, Getränkekomponenten, Sirup etc.) zur Ausgabe geführt werden.

Zur Getränkeausgabe sind zwei separate Einheiten vorgesehen, nämlich der Getränkeauslauf 38 und der Schäumerkopf 23. Der Schäumerkopf 23, der zur Ausgabe von aufgeschäumter Milch bei speziellen Kaffee-Getränken wie beispielsweise Cappuccino eingesetzt wird, ist lösbar mit einem Anschlussstutzen 22 verbunden. Er ist aus Hygienegründen als Wegwerfteil ausgebildet. Die aufgesteckte Position des Schäumerkopfes 23 wird für die zentrale Steuerung der Maschine durch Mikroschalter 49 überwacht, die an einer ersten Halterung 45 angeordnet sind und sich auf der Rückseite einer zweiten Halterung 47 für den Getränkeauslauf befinden.

Die zweite Halterung 47 ist an dem Halteblech 30 befestigt und auf der Rückseite mit vier in einem Rechtecke angeordneten Magneten 31 ausgestattet, die ein auf die Vorderseite der zweiten Halterung 47 aufgesetztes Magnetblech 29, welches den Getränkeauslauf 38 trägt, auf einfach lösbare und schnelle Weise anziehen und fixieren. Selbstverständlich können auch andere Arten der Befestigung vorgesehen werden. Der Schäumerkopf 23, der insbesondere den in der Druckschrift DE 20201 1051719 U1 gezeigten Aufbau haben kann, ist durch eine Öffnung in der zweiten Halterung 47 hindurch mit dem Anschlussstutzen 22 verbunden. Er ist gleichzeitig vom zentralen Teil des Getränkeauslaufs 38 umgeben, aus dem er nach unten herausragt.

Am Getränkeauslauf 38 enden verschiedene Ausgabeschläuche 24, 25 für Getränke bzw. Getränkekomponenten, die nach unten ausgegeben werden. Die Enden der Ausgabeschläuche 24, 25 sind von Stücken Isolierschlauch 41, 42 umschlossen und durch einen Schlauchhalter 40 und eine aufgeschobene, bügelartige Schlauchfixierung 37 am Getränkeauslauf 38 fixiert. Eine aufgesetzte Schlauchklemme 39 fixiert die Ausgabeschläuche 24, 25 im oberen Teil des Getränkeauslaufs 38.

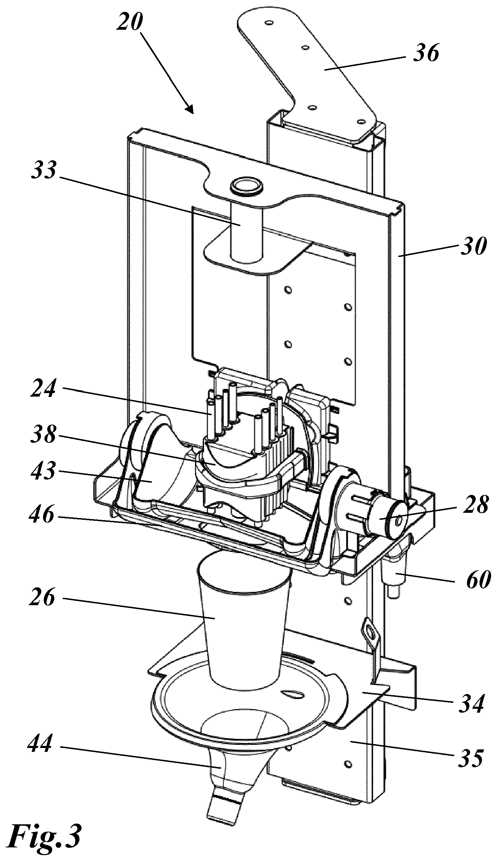

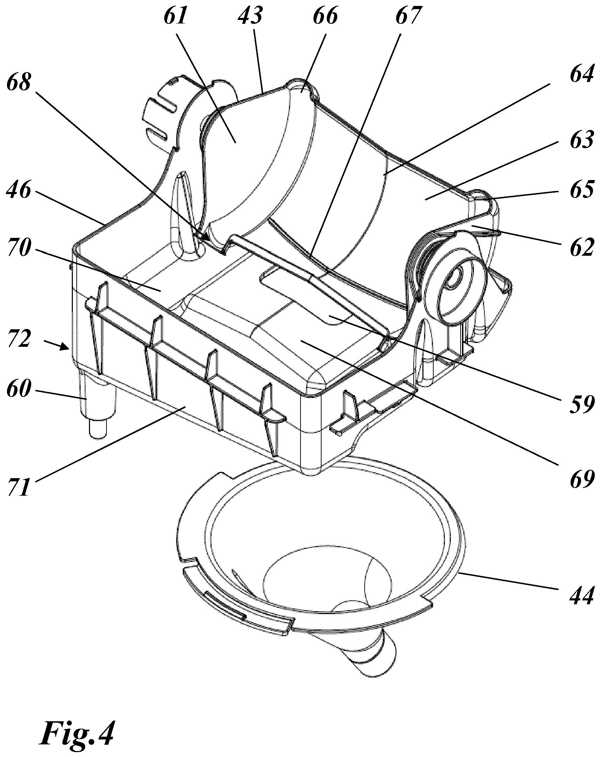

Wird ein Becher 26 auf die (nicht gezeigte) Tragplatte über dem Ausguss 44 gestellt (Fig. 3), hat der obere Rand des Bechers 26 einen gewissen vertikalen Abstand zu den aus dem Getränkeauslauf 38 nach unten herausragenden Enden der Ausgabeschläuche 24, 25. In diesem freien Zwischenraum ist nun eine horizontal liegende Auffangwanne 46 ortsfest angeordnet und an am Halteblech 30 ausgebildeten seitlichen Winkeln befestigt. Die Auffangwanne 46 hat (siehe insbesondre auch Fig. 4) in ihrem Boden einen erhöhten Mittelteil 69 mit einer zentralen Öffnung 59, durch die vom Getränkeauslauf 38 abgegebene Flüssigkeiten ungehindert in den darunter stehenden Becher 26 gelangen können.

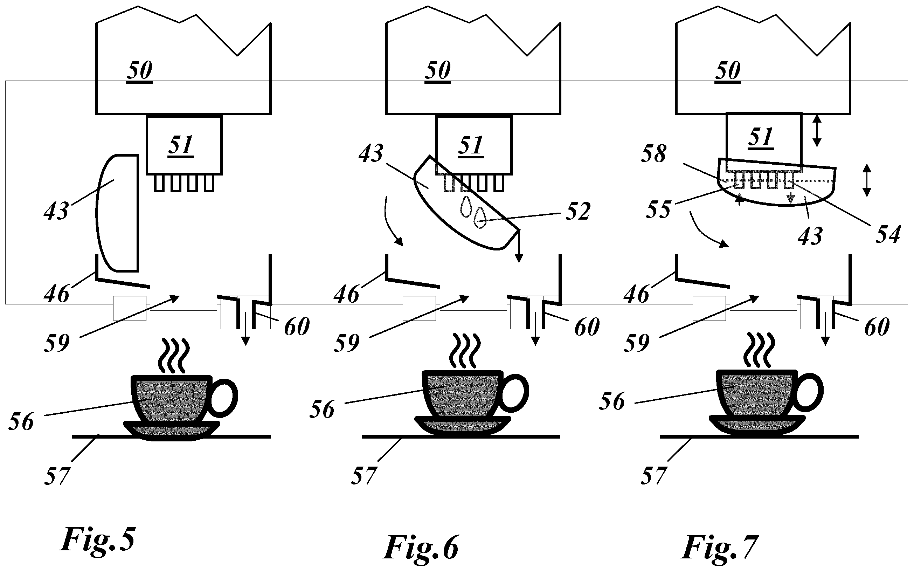

An den Seitenwänden der Auffangwanne 46 sind nach oben vorstehend einander gegenüberliegende Schwenklager 21 a und 21 b angeformt, die eine Schwenkachse 19 festlegen. Um die Schwenkachse 19 schwenkbar gelagert ist in den Schwenklagern 21 a,b eine innerhalb der Auffangwanne 46 liegende, nach unten zu geschlossene Reinigungswanne 43. Am einen Schwenklager 21 b ist die Reinigungswanne 43 über einen Mitnehmer 48 und ein Drehmomentübertragungselement 32 von einem steuerbaren Motor 28 derart antreibbar, dass die Reinigungswanne 43 in verschiedene Schwenkpositionen (siehe Fig. 5-7) verschwenkt werden kann.

Weitere Details der Auffangwanne 46 und Reinigungswanne 43 können der vergrösserten Darstellung in Fig. 4 entnommen werden. Die in der Auffangwanne 46 schwenkbar angeordnete Reinigungswanne 43 umfasst zwei in Richtung der Schwenkachse gegenüberliegende Seitenwände 61 und 62 und einen die beiden Seitenwände 61, 62 verbindenden Boden 63. Der Boden 63 ist nicht horizontal eben ausgebildet, sondern ist einerseits konzentrisch zur Schwenkachse gewölbt, und steigt andererseits von den Seitenwänden 61, 62 ausgehend zur Mitte hin an und bildet dort einen Mittelrücken 64 aus, von dem aus Flüssigkeit, die sich in der Reinigungswanne 43 befindet, schräg zu den Seitenwänden 61, 62 hin abfliesst und sich unten an den Seitenwänden 61, 62 sammelt. Zur Sammlung der zu den Seitenwänden 61, 62 hin fliessenden Flüssigkeit sind am unteren Rand der Seitenwände 61, 62 in den Boden 63 eingelassen vertiefte, bogenförmige erste Sammelrinnen 65, 66 ausgeformt.

Die ersten Sammelrinnen 65, 66 sammeln die Flüssigkeit und giessen sie in die darunter befindliche Auffangwanne 46 aus, wenn die Reinigungswanne 43 nach aussen (in Fig. 4 nach hinten) ausgeschwenkt wird. Hierzu sind die Enden der ersten Sammelrinnen 65, 66 jeweils unterschiedlich ausgebildet. Die hinteren Enden der Sammelrinnen 65, 66 haben einen hochgezogenen Rand, während bei den vorderen Enden der Randnach unten abgebogen ist und jeweils einen Ausguss 68 bildet. Zusätzlich ist auf der Oberseite des Bodens 63 der Reinigungswanne 43 eine sich in Richtung der Schwenkachse erstreckendes, leistenförmiges Leitelement 67 angeordnet, das eine Ausbreitung der Flüssigkeit zum vorderen Längsrand des Bodens 63 verhindert und die Flüssigkeit zu den seitlichen Sammelrinnen 65, 66 hin umlenkt.

Befindet sich die Reinigungswanne 43 in der in Fig. 4 dargestellten Schwenkposition oder wird sie aus dieser Position noch weiter nach aussen geschwenkt, ergiesst sich die in den Sammelrinnen 65, 66 gesammelte Flüssigkeit über die Ausgüsse 68 in die darunter befindliche Auffangwanne 46. Die Auffangwanne 46 hat einerseits einen erhöhten Mittelteil 69, der die sich aus den ersten Sammelrinnen 65, 66 in die Auffangwanne 46 ergiessende Flüssigkeit davon abhält, durch die im Mittelteil 69 angeordnete zentrale Öffnung 59 nach unten auszuströmen. Vielmehr sammelt sich diese Flüssigkeit in tiefer liegenden zweiten seitlichen Sammelrinnen 70. Wie an der Rückwand 71 der Auffangwanne 46 in Fig. 4 zu erkennen ist, ist der Boden der Auffangwanne 46 so schräg ausgebildet, dass er in einer (in Fig. 4 linken) hinteren Ecke der Wanne einen am tiefsten gelegenen Sammelpunkt 72 schafft, von dem aus ein Auslass 60 nach unten abgeht. In die Auffangwanne 46 einfliessende Flüssigkeit sammelt sich so am tiefsten Punkt 72 und kann von dort aus - unsichtbar für den Benutzer des Gerätes - durch den Auslass nach hinten in das Gerät entsorgt bzw. in den ohnehin vorhandenen Ausguss 44 eingeleitet werden.

Die Fig. 5-7 zeigen verschiedene Positionen, die eine erfindungsgemässe Wanne, insbesondere auch die Reinigungswanne 43 aus Fig. 2-4, einnehmen kann. In einer ersten Position, die für einen Kaffeeautomaten 50 mit dem Auslauf 51, der Wanne 43 und der auf einer Stellfläche 57 unter dem Auslauf 51 stehenden Tasse 56 in Fig. 5 dargestellt ist, gibt die nach auswärts gekippte Wanne 43, die in ihrer Funktion der Reinigungswanne 43 in Fig. 2-4 entspricht, den Weg für die aus dem Auslauf 51 kommenden Getränke bzw. Getränkekomponenten frei, damit diese ungehindert durch die Öffnung 59 in der darunter befindlichen Auffangwanne 46 in die unter dem Auslauf 51 stehende Tasse 56 (oder einen gleichwertigen Behälter) fliessen können.

In einer zweiten Position, die in Fig. 7 dargestellt ist, ist die Wanne 43 vollständig unter den Auslauf 51 verschwenkt, so dass der Auslauf 51 mit seinen Öffnungen bzw. Schlauch- oder Rohrenden für die Getränkeabgabe in die Wanne 43 eintaucht. In dieser zweiten Position kann der Auslauf 51 von aussen anhaftenden Flüssigkeitsresten oder eingetrockneten Rückständen gereinigt werden, in dem die Wanne 43 ausreichend hoch mit einer Spül- bzw. Reinigungsflüssigkeit 58 gefüllt wird. In diesem Zusammenhang kann vorgesehen werden, dass die Wanne 52 und/oder der Auslauf 51 (wie dies in Fig. 7 durch Doppelpfeile angedeutet ist) in vertikaler Richtung relativ zur Maschine oder relativ zueinander verfahren werden, um eine bessere Reinigung zu ermöglichen. Insbesondere kann in einem solchen Fall anstelle der reinen Schwenkbewegung um eine horizontale Achse auch eine zusammengesetzte Bewegung der Wanne vorgesehen werden, bei der z.B. die Wanne um eine vertikale Achse von aussen unter den Auslauf gedreht und anschliessend in der Höhe verfahren wird, um die notwendige Eintauchsituation gemäss Fig. 7 zu erreichen.

Der Reinigungsvorgang des in die gefüllte Wanne 43 eingetauchten Auslaufs 51 kann auf unterschiedliche Weise ablaufen:
- Die Wanne 43 kann durch ein am Auslauf 51 angeordnetes Rohr oder einen Schlauch mit der Spülflüssigkeit gefüllt werden; das Rohr oder der Schlauch können ein Rohr oder Schlauch sein, die sonst der Getränkeabgabe dienen und für die Reinigung mitbenutzt werden; es ist aber auch denkbar, separate Leitungen zu verwenden.
- Die Spülung kann so vorgenommen werden, dass fortlaufend Spülflüssigkeit in die Wanne 43 zugeführt wird, oben über den Rand der Wanne 43 läuft und dann über die darunter liegende Auffangwanne 46 und den daran angeordneten Auslass 60 für den Bediener unsichtbar nach hinten abgeführt wird.
- Es ist aber auch denkbar, die Wanne 43 nur bis zu einem ausreichenden Niveau mit der Spülflüssigkeit zu füllen und später die Wanne 43 durch Verkippen (in die in Fig. 5 gezeigte erste Position) in die Auffangwanne 46 zu leeren.
- Es ist aber auch denkbar (jedoch nicht in den Figuren dargestellt), an der Wanne selbst einen Abfluss vorzusehen, der auf- und zugemacht werden kann.
- Der Reinigungsvorgang selbst kann auf unterschiedliche Weise unterstützt werden:
   ∘ Die Spülflüssigkeit kann durch Eindüsen von Dampf und/oder Luft erhitzt und/oder in heftige Bewegung versetzt werden, um die Reinigungswirkung zu erhöhen.
   ∘ Die Wanne 43 selbst kann bewegt werden, um den Spülvorgang zu unterstützen; dies kann durch einfache mechanische Bewegung aber auch durch Anlegen von Ultraschall (mittels eines Ultraschallgebers) erfolgen.

Insgesamt gesehen ist der Auslauf 51 des Kaffeeautomaten 50 (oder Getränkeautomaten) gemäss Fig. 5-7 so gestaltet, dass mit Hilfe einer (dort nicht gezeigten) schwenkbaren Einrichtung die Wanne 43 oder eine Art "Schale" unter den Auslauf 51 geschwenkt werden kann. Diese Wanne 43 oder Schale kann in drei Positionen geschwenkt werden:
Position 1 (Fig. 5; "offen"): Der Auslauf 51 ist geöffnet und die unterschiedlichen Getränke fliessen in die Tasse 56 bzw. ein entsprechendes Trinkgefäss.
Position 2 (Fig. 7; "Reinigung"): Der schwenkbare Teil ist so gestaltet, dass in dieser Position die Wanne 43 den Auslauf 51 so umfasst, dass mit dem Reinigungswasser die Aussenseite des Auslaufs 51 umspült und damit gereinigt wird (dies ist insbesondere bei den einen Sirup führenden Schläuchen ein enormer Vorteil).

Zwischenposition (Fig. 6; "geschlossen"): Der schwenkbare Teil ist unter den Auslauf 51 geschwenkt und allfällige "Nachtropfen" (Tropfen 52) fallen auf den schwenkbaren Teil (Wanne 43) anstatt in den sichtbaren Bereich darunter. In dieser Position kann auch gespült werden und das Spülwasser fliesst unsichtbar für den Benutzer über die Auffangwanne 46ab.

Handelt es sich bei dem Getränkeautomaten um einen Getränkeverkaufsautomaten (10 in Fig. 1), ist der Auslauf 20 normalerweise in einer bestimmten Höhe fixiert, da immer die gleichen Becher 26 verwendet werden.

Bei einer konventionellen Kaffeemaschine (Kaffeeautomat 50 der Fig. 5-7) sollte es dann auch möglich sein, dass der Auslauf 51 in der Höhe (motorisch betrieben) verstellbar ist und der schwenkbare Teil (Wanne 43) nur in der obersten Position unter den Auslauf 51 geschwenkt wird. Dabei kann zum Beispiel der schwenkbare Teil (43) separat motorisch angetrieben sein oder aber mechanisch mit dem Auslauf 51 so gekoppelt, dass eine Schwenkbewegung automatisch passiert, wenn der Auslauf 51 in die oberste Position fährt (siehe die Doppelpfeile in Fig. 7).

### Bezugszeichenliste

- 10: Getränkeverkaufsautomat
- 11: Gehäuse
- 12: Konsole
- 13a: Oberteil
- 13b: Unterteil
- 14: Getränkeausgabe (Auslauf)
- 1 5: Bedien/Anzeigeeinheit (z.B. Touchscreen)
- 16: Becherschacht
- 17: Fach
- 18: Bezahleinheit
- 19: Schwenkachse
- 20: Auslaufmodul
- 21a,b: Schwenklager
- 22: Anschlussstutzen (Schäumerkopf)
- 23: Schäumerkopf
- 24,25: Ausgabeschlauch
- 26: Becher
- 28: Motor
- 29: Magnetblech
- 30: Halteblech
- 31: Magnet
- 32: Drehmomentübertragungselement
- 33: Führungsrohr (für Schläuche)
- 34: Ausgusshalter
- 35: Modulträger
- 36: Scharnierplatte
- 37: Schlauchfixierung (bügelartig)
- 38: Getränkeauslauf
- 39: Schlauchklemme
- 40: Schlauchhalter
- 41,42: Isolierschlauch
- 43: Reinigungswanne (schwenkbar)
- 44: Ausg uss
- 45: Halterung (Druckschalter)
- 46: Auffangwanne
- 47: Halterung (Getränkeauslauf)
- 48: Mitnehmer
- 49: Mikroschalter
- 50: Kaffeeautomat
- 51: Auslauf
- 52: Tropfen
- 54: Zulauf
- 55: Ablauf
- 56: Tasse
- 57: Stellfläche
- 58: Spülflüssigkeit
- 59: Öffnung
- 60: Auslass (Auffangwanne)
- 61,62: Seitenwand (Reinigungswanne)
- 63: Boden (Reinigungswanne)
- 64: Mittelrücken (Reinigungswanne)
- 65,66: Sammelrinne (Reinigungswanne)
- 67: Leitelement (Reinigungswanne)
- 68: Ausguss (Reinigungswanne)
- 69: Mittelteil (erhöht)
- 70: Sammelrinne (Auffangwanne)
- 71: Rückwand (Auffangwanne)
- 72: Sammelpunkt (Auffangwanne)

## Patentansprüche

1. Getränkeautomat (10, 50), umfassend einen nach unten gerichteten Auslauf (38, 51) zur Ausgabe eines im Getränkeautomaten (10, 50) zubereiteten Getränks und/oder einer im oder am Getränkeautomaten (10, 50) vorgehaltenen Komponente eines Getränks in ein darunter stehendes Gefäss (26, 56), wobei im Bereich des Auslaufs (38, 51) eine Wanne (43) angeordnet ist, welche zwischen einer ersten Position, in der das zubereitete Getränk bzw. die vorgehaltene Komponente ungehindert aus dem Auslauf (38, 51) in ein darunter stehendes Gefäss (26, 56) gelangen kann, und einer zweiten Position, in der die Wanne (43) zumindest einen unteren Teil des Auslaufs (38, 51) in sich aufnimmt, hin und her bewegbar ist, **dadurch gekennzeichnet, dass** die Wanne (43) um eine horizontale Schwenkachse (19) verschwenkbar angeordnet ist, derart, dass die Bewegung der Wanne (43) zwischen der ersten und zweiten Position als Schwenkbewegung um die Schwenkachse (19) ausführbar ist.

2. Getränkeautomat nach Anspruch 1, **dadurch gekennzeichnet, dass** sich die Wanne (43) in der zweiten Position in horizontaler Lage befindet.

3. Getränkeautomat nach Anspruch 1, **dadurch gekennzeichnet, dass** sich die Wanne (43) in der ersten Position in einer gekippten Lage befindet, derart, dass eine in der Wanne (43) befindliche Flüssigkeit vollständig nach unten auslaufen kann.

4. Getränkeautomat nach Anspruch 1, **dadurch gekennzeichnet, dass** der Auslauf (38, 51) an der Vorderseite des Getränkeautomaten (10, 50) angeordnet ist und dass die Schwenkachse (19) parallel zur Vorderseite des Getränkeautomaten (10, 50) orientiert ist, und dass die Wanne (43) bei der Bewegung von der zweiten in die erste Position nach aussen herausgeschwenkt wird.

5. Getränkeautomat nach Anspruch 1, **dadurch gekennzeichnet, dass** der Auslauf (51) und die darunter befindliche Wanne (43) in vertikaler Richtung, insbesondere mittels eines steuerbaren motorischen Antriebs, relativ zueinander beweglich sind.

6. Getränkeautomat nach Anspruch 1, **dadurch gekennzeichnet, dass** zum Reinigen des unteren Teils des Auslaufs (38, 51), der sich in der Wanne (43) befindet, wenn die Wanne (43) die zweite Position einnimmt, erste Mittel (54) vorgesehen sind, mittels derer eine Spülflüssigkeit in die Wanne (43) eingefüllt werden kann, und dass zweite Mittel (55) vorgesehen sind, mittels derer eine in der Wanne (43) befindliche Flüssigkeit aus der Wanne (43) entfernt werden kann.

7. Getränkeautomat nach Anspruch 1, **dadurch gekennzeichnet, dass** für die Bewegung der Wanne (43) zwischen der ersten und zweiten Position ein motorischer Antrieb (28, 32, 48) am Getränkeautomaten (10, 50) vorgesehen ist.

8. Getränkeautomat nach Anspruch 1, **dadurch gekennzeichnet, dass** die Wanne (43) zwischen der ersten und zweiten Position eine Zwischenposition einnehmen kann, in welcher sie aus dem Auslauf (38, 51) austretende Restflüssigkeit (52) auffängt.

9. Getränkeautomat nach Anspruch 1, **dadurch gekennzeichnet, dass** unterhalb des Gefässes (26,56) ein Ausguss (44) angeordnet ist, und das unmittelbar unter der Wanne (43) eine Auffangwanne (46) ortsfest angeordnet ist, die eine Öffnung (59) im Boden zum Durchlassen von durch den Auslauf (38, 51) abgegebenen Flüssigkeiten aufweist.

10. Getränkeautomat nach Anspruch 1, **dadurch gekennzeichnet, dass** der Getränkeautomat ein Getränkeverkaufsautomat (10) ist, und dass der Auslauf (38) für die Ausgabe einer Vielzahl unterschiedlicher Getränke ausgelegt ist.

11. Getränkeautomat nach Anspruch 1, **dadurch gekennzeichnet, dass** der Getränkeautomat ein Kaffeeautomat (50) ist.

12. Verfahren zum Betrieb eines Getränkeautomaten (10, 50) nach Anspruch 1, bei welchem Verfahren die Wanne (43) in der ersten Position gehalten wird, wenn der Getränkeautomat (10, 50) am Auslauf (38, 51) ein Getränk in ein unter dem Auslauf (38, 51) stehendes Gefäss (26, 56) ausgibt, und nach Beendigung einer Getränkeausgabe zum Reinigen des Auslaufs (38, 51) in die zweite Position bewegt und mit einer Spülflüssigkeit gefüllt wird.

13. Verfahren nach Anspruch 12, **dadurch gekennzeichnet, dass** nach Beendigung der Reinigung des Auslaufs (38, 51) die Wanne (43) zum Ausleeren der Spülflüssigkeit in die erste Position bewegt wird.

14. Verfahren nach Anspruch 12, **dadurch gekennzeichnet, dass** nach Beendigung der Reinigung des Auslaufs (38, 51) die Spülflüssigkeit aus der Wanne (43) abgelassen oder abgesaugt wird.

15. Verfahren nach Anspruch 12, **dadurch gekennzeichnet, dass** die Wanne (43) nach Beendigung der Ausgabe eines Getränks zum Auffangen von aus dem Auslauf (38, 51) austretender Restflüssigkeit (52) in ein zwischen der ersten und zweiten Position liegende Zwischenposition bewegt wird.

## Claims

1. An automatic beverage machine (10, 50), comprising a downwardly directed outlet (38, 51) for dispensing a beverage prepared in the automatic beverage machine (10, 50), and/or for dispensing a component of a beverage, stored in or at the automatic beverage machine (10, 50), into a container (26, 56) situated therebeneath, wherein a trough (43) is situated in the area of the outlet (38, 51), the trough being movable back and forth between a first position, in which the prepared beverage or the stored component may pass unhindered from the outlet (38, 51) into a container (26, 56) situated therebeneath, and a second position, in which the trough (43) accommodates at least a lower part of the outlet (38, 51), **characterized in that** the trough (43) is arranged so that it is pivotable about a horizontal pivot axis (19) such that the movement of the trough (43) between the first and second positions may be carried out as a swivel movement about the pivot axis (19).

2. The automatic beverage machine according to Claim 1, **characterized in that** in the second position the trough (43) is in the horizontal orientation.

3. The automatic beverage machine according to Claim 1, **characterized in that** in the first position the trough (43) is in a tilted orientation, such that a liquid present in the trough (43) may completely run out downwardly.

4. The automatic beverage machine according to Claim 1, **characterized in that** the outlet (38, 51) is situated on the front side of the automatic beverage machine (10, 50), and the pivot axis (19) is oriented in parallel to the front side of the automatic beverage machine (10, 50), and the trough (43) is swiveled outwardly during the movement from the second position into the first position.

5. The automatic beverage machine according to Claim 1, **characterized in that** the outlet (51) and the trough (43) situated therebeneath are movable relative to one another in the vertical direction, in particular by means of a controllable motorized drive.

6. The automatic beverage machine according to Claim 1, **characterized in that** for cleaning the lower part of the outlet (38, 51) situated in the trough (43), when the trough (43) assumes the second position, first means (54) are provided via which a rinse liquid may be filled into the trough (43), and second means (55) are provided via which a liquid present in the trough (43) may be removed from the trough (43).

7. The automatic beverage machine according to Claim 1, **characterized in that** a motorized drive (28, 32,48) is provided on the automatic beverage machine (10, 50) for the movement of the trough (43) between the first position and the second position.

8. The automatic beverage machine according to Claim 1, **characterized in that** the trough (43) may assume an intermediate position, between the first position and the second position, in which it collects residual liquid (52) exiting from the outlet (38, 51).

9. The automatic beverage machine according to Claim 1, **characterized in that** a drain (44) is situated below the container (26, 56), and a collecting trough (46) is stationarily situated directly below the trough (43), the collecting trough having an opening (59) in the base for liquids that are discharged through the outlet (38, 51) to pass through.

10. The automatic beverage machine according to Claim 1, **characterized in that** the automatic beverage machine is a beverage vending machine (10), and the outlet (38) is designed for dispensing a plurality of different beverages.

11. The automatic beverage machine according to Claim 1, **characterized in that** the automatic beverage machine is an automatic coffee dispensing machine (50).

12. A method for operating an automatic beverage machine (10, 50) according to Claim 1, in which method the trough (43) is held in the first position when the automatic beverage machine (10, 50) dispenses at the outlet (38, 51) a beverage into a container (26, 56) standing beneath the outlet (38, 51), and after the dispensing of the beverage having been completed, the trough is moved into the second position and is filled with a rinse liquid in order to clean the outlet (38, 51).

13. The method according to Claim 12, **characterized in that** after completion of the cleaning of the outlet (38, 51), the trough (43) is moved into the first position in order to empty the rinse liquid.

14. The method according to Claim 12, **characterized in that** after completion of the cleaning of the outlet (38, 51), the rinse liquid is discharged or siphoned off from the trough (43).

15. The method according to Claim 12, **characterized in that** after completion of the dispensing of a beverage, the trough (43) is moved into an intermediate position, between the first position and the second position, in order to collect residual liquid (52) exiting from the outlet (38, 51).

## Revendications

1. Distributeur automatique de boissons (10, 50), comprenant une sortie (38, 51) dirigée vers le bas et destinée à délivrer une boisson préparée dans le distributeur automatique de boissons (10, 50) et/ou un composant d'une boisson, stocké dans ou au niveau du distributeur automatique de boissons (10, 50), dans un récipient (26, 56) situé à au-dessous, une cuvette (43) étant disposée dans la zone de la sortie (38, 51), laquelle cuvette étant mobile alternativement entre une première position, dans laquelle la boisson préparée ou le composant stocké peut passer sans entrave de la sortie (38, 51) jusque dans un récipient (26, 56) situé au-dessous, et une seconde position, dans laquelle la cuvette (43) reçoit au moins une partie inférieure de la sortie (38, 51), **caractérisé en ce que** la cuvette (43) est disposée de manière à pouvoir pivoter sur un axe de pivotement horizontal (19) de sorte que le déplacement de la cuvette (43) entre la première position et la seconde position puisse être effectué comme un mouvement de pivotement sur l'axe de pivotement (19).

2. Distributeur automatique de boissons selon la revendication 1, **caractérisé en ce que** la cuvette (43) est placée horizontalement dans la seconde position.

3. Distributeur automatique de boissons selon la revendication 1, **caractérisé en ce que** la cuvette (43) est inclinée dans la première position de sorte qu'un liquide présent dans la cuvette (43) peut entièrement s'écouler vers le bas.

4. Distributeur automatique de boissons selon la revendication 1, **caractérisé en ce que** la sortie (38, 51) est disposée du côté avant du distributeur automatique de boissons (10, 50), et **en ce que** l'axe de pivotement (19) est orienté parallèlement au côté avant du distributeur automatique de boissons (10, 50), et **en ce que** la cuvette (43) pivote vers l'extérieur pendant le mouvement de la seconde position dans la première position.

5. Distributeur automatique de boissons selon la revendication 1, **caractérisé en ce que** la sortie (51) et la cuvette (43) située au-dessous sont mobiles l'une par rapport à l'autre dans la direction verticale, notamment au moyen d'un entraînement motorisé commandable.

6. Distributeur automatique de boissons selon la revendication 1, **caractérisé en ce que**, pour nettoyer la partie inférieure de la sortie (38, 51) située dans la cuvette (43), lorsque la cuvette (43) occupe la seconde position, il est prévu des premiers moyens (54) à l'aide desquels un liquide de rinçage peut être introduit dans la cuvette (43), et **en ce qu'**il est prévu des seconds moyens (55) à l'aide desquels un liquide présent dans la cuvette (43) peut être retiré de la cuvette (43).

7. Distributeur automatique de boissons selon la revendication 1, **caractérisé en ce qu'**un entraînement motorisé (28, 32, 48) est prévu au niveau du distributeur automatique de boissons (10, 50) pour déplacer la cuvette (43) entre la première position et la seconde position.

8. Distributeur automatique de boissons selon la revendication 1, **caractérisé en ce que** la cuvette (43) peut occuper une position intermédiaire entre la première position et la seconde position, dans laquelle elle collecte le liquide résiduel (52) sortant de la sortie (38, 51).

9. Distributeur automatique de boissons selon la revendication 1, **caractérisé en ce qu'**un bec (44) est situé sous le récipient (26, 56), et **en ce qu'**un bassin de collecte (46) est disposé immobile directement au-dessous de la cuvette (43), lequel bassin de collecte comporte une ouverture (59) ménagée dans le fond pour laisser passer des liquides qui sont évacués par la sortie (38, 51).

10. Distributeur automatique de boissons selon la revendication 1, **caractérisé en ce que** le distributeur automatique de boissons est un distributeur de vente de boissons (10), et **en ce que** la sortie (38) est conçue pour délivrer une pluralité de boissons différentes.

11. Distributeur automatique de boissons selon la revendication 1, **caractérisé en ce que** le distributeur automatique de boissons est un distributeur de café (50).

12. Procédé de fonctionnement d'un distributeur automatique de boissons (10, 50) selon la revendication 1, dans lequel la cuvette (43) est maintenue dans la première position lorsque le distributeur automatique de boissons (10, 50) délivre à la sortie (38, 51) un boisson dans un récipient (26, 56) situé au-dessous de la sortie (38, 51) et, une fois la délivrance de la boisson terminée, la cuvette est déplacée dans la seconde position et remplie d'un liquide de rinçage pour nettoyer la sortie (38, 51).

13. Procédé selon la revendication 12, **caractérisé en ce que**, une fois le nettoyage de la sortie (38, 51) terminé, la cuvette (43) est déplacée dans la première position afin de vider le liquide de rinçage.

14. Procédé selon la revendication 12, **caractérisé en ce que**, une fois le nettoyage de la sortie (38, 51) terminé, le liquide de rinçage est évacué ou aspiré de la cuvette (43).

15. Procédé selon la revendication 12, **caractérisé en ce que**, une fois la délivrance d'une boisson terminée, la cuvette (43) est déplacée dans une position intermédiaire, entre la première position et la seconde position, afin de collecter le liquide résiduel (52) sortant de la sortie (38, 51).
